# EUROPEAN PATENT APPLICATION

(11) **EP 4 231 173 A1**
(43) Date of publication of application: **23.08.2023**
(21) Application number: 22203365.6
(22) Date of filing: 24.10.2022
(51) Int. Cl.: G06F 16/955, G06F 16/958

(54) **WEBPAGE HISTORY DISPLAY METHOD AND APPARATUS, DEVICE, AND STORAGE MEDIUM**

(30) Priority: 16.02.2022 CN 202210141298
(71) Applicant: Beijing Baidu Netcom Science Technology Co., Ltd., Beijing 100085 (CN)
(72) Inventor: WANG,, Mingzhi, BEIJING, 100085 (CN); HUA,, Liangcong, BEIJING, 100085 (CN)
(74) Representative: Regimbeau

(57) **Abstract**

Provided are a webpage history display method and apparatus, a device, and a storage medium, which relate to the field of information processing technology and, in particular, to information processing technology and cloud service technology of the Internet. The method includes: acquiring historical webpage browsing data of a target user; determining webpage sorting display index data and a jump derivative relationship of historical webpages according to the historical webpage browsing data; sorting the historical webpages according to the webpage sorting display index data; and generating a historical webpage relationship map according to a sorting result of the historical webpages and the jump derivative relationship and displaying the historical webpage relationship map. The historical webpages browsed by a user can be intuitively displayed, improving the transmission efficiency of the historical webpages and improving the efficiency with which the user retrieves a historical webpage.

## Description

### TECHNICAL FIELD

The present disclosure relates to the field of information processing technology and, in particular, to information processing technology and cloud service technology of the Internet.

### BACKGROUND

Browser history refers to the browsing history automatically recorded by a system when a user browses webpages using a browser. Browser history helps, based on time clues, the user to retrieve previously browsed webpages, thereby effectively improving the experience and efficiency of the user using the browser, for example, saving time for searching for a previously browsed webpage. With the explosive growth of network information and more and more time people spend on networks, an increasing number of browsing records are generated in the process of browsing webpages. The browser history aims to improve the information retrieval efficiency of the user. Therefore, it is very important to display information in the most intuitive and clear manner.

### SUMMARY

Embodiments of the present disclosure provide a webpage history display method and apparatus, a device, and a storage medium, which can intuitively display historical webpages browsed by a user, improving the transmission efficiency of the historical webpages and improving the efficiency with which the user retrieves a historical webpage.

In a first aspect, an embodiment of the present disclosure provides a webpage history display method. The method includes the steps described below.

Historical webpage browsing data of a target user is acquired.

Webpage sorting display index data and a jump derivative relationship of historical webpages are determined according to the historical webpage browsing data.

The historical webpages are sorted according to the webpage sorting display index data.

A historical webpage relationship map is generated according to a sorting result of the historical webpages and the jump derivative relationship and is displayed.

In a second aspect, an embodiment of the present disclosure provides a webpage history display apparatus. The apparatus includes a historical webpage browsing data acquisition module, an index data and derivative relationship determination module, a historical webpage sorting module, and a webpage relationship map generation and display module.

The historical webpage browsing data acquisition module is configured to acquire historical webpage browsing data of a target user.

The index data and derivative relationship determination module is configured to determine webpage sorting display index data and a jump derivative relationship of historical webpages according to the historical webpage browsing data.

The historical webpage sorting module is configured to sort the historical webpages according to the webpage sorting display index data.

The webpage relationship map generation and display module is configured to generate a historical webpage relationship map according to a sorting result of the historical webpages and the jump derivative relationship and display the historical webpage relationship map.

In a third aspect, an embodiment of the present disclosure provides an electronic device. The electronic device includes at least one processor and a memory.

The memory is communicatively connected to the at least one processor.

The memory stores an instruction executable by the at least one processor to cause the at least one processor to perform the webpage history display method provided by the embodiment in the first aspect.

In a fourth aspect, an embodiment of the present disclosure further provides a non-transitory computer-readable storage medium, which is configured to store a computer instruction for causing a computer to perform the webpage history display method provided by the embodiment in the first aspect.

In a fifth aspect, an embodiment of the present disclosure further provides a computer program product including a computer program which, when executed by a processor, causes the processor to perform the webpage history display method provided by the embodiment in the first aspect.

In the embodiments of the present disclosure, the webpage sorting display index data and the jump derivative relationship of the historical webpages are determined according to the acquired historical webpage browsing data so that the historical webpages are sorted according to the webpage sorting display index data, and the historical webpage relationship map is generated according to the sorting result of the historical webpages and the jump derivative relationship and is displayed, thereby solving the problems where the webpage history display method in the related art is not intuitive enough and has low transmission efficiency and low user retrieval efficiency. As a result, the historical webpages browsed by a user can be intuitively displayed, improving the transmission efficiency of the historical webpages and improving the efficiency with which the user retrieves a historical webpage.

It is to be understood that the content described in this part is neither intended to identify key or important features of embodiments of the present disclosure nor intended to limit the scope of the present disclosure. Other features of the present disclosure are apparent from the description provided hereinafter.

### BRIEF DESCRIPTION OF DRAWINGS

The drawings are intended to provide a better understanding of the solution and not to limit the present disclosure. In the drawings:
FIG. 1 is an effect schematic of a webpage history function interface of a browser in the related art;
FIG. 2 is an effect schematic of a webpage history function list interface of a browser in the related art;
FIG. 3 is a flowchart of a webpage history display method according to an embodiment of the present disclosure;
FIG. 4 is a flowchart of a webpage history display method according to an embodiment of the present disclosure;
FIG. 5 is an effect schematic of a historical webpage relationship map according to an embodiment of the present disclosure;
FIG. 6 is a structural diagram of a webpage history display apparatus according to an embodiment of the present disclosure; and
FIG. 7 is a structural diagram of an electronic device for implementing a webpage history display method according to an embodiment of the present disclosure.

### DETAILED DESCRIPTION

Example embodiments of the present disclosure, including details of embodiments of the present disclosure, are described hereinafter in conjunction with drawings to facilitate understanding. The example embodiments are illustrative only. Therefore, it is to be appreciated by those of ordinary skill in the art that various changes and modifications may be made to the embodiments described herein without departing from the scope and spirit of the present disclosure. Similarly, description of well-known functions and constructions is omitted hereinafter for clarity and conciseness.

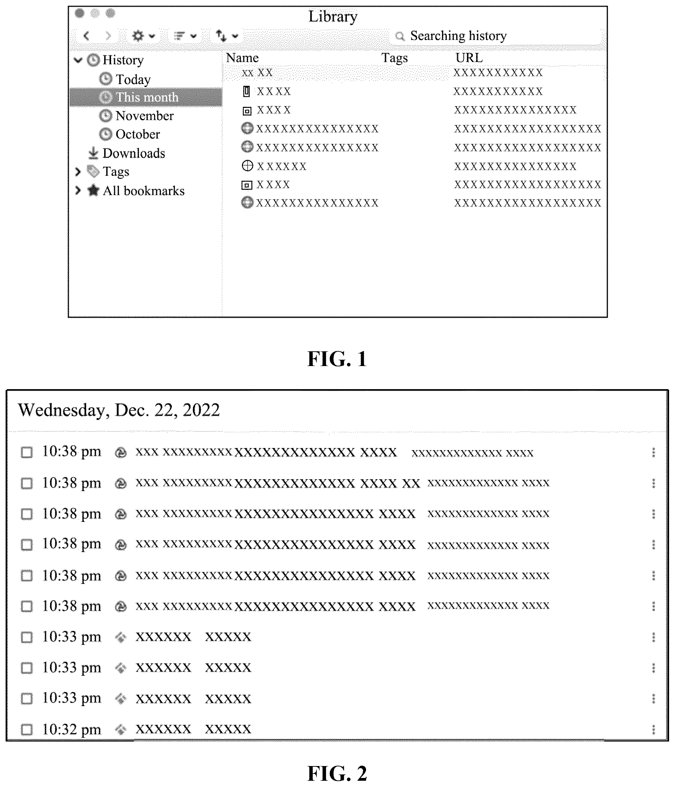

In the related art, each browser usually has a webpage history function. FIG. 1 is an effect schematic of a webpage history function interface of a browser in the related art. FIG. 2 is an effect schematic of a webpage history function list interface of a browser in the related art. In an example, as shown in FIGS. 1 and 2, a browser in the related art displays webpage history by the following scheme: the Uniform Resource Locators (URLs), names, and starting time points of visits of the websites that a user has recently visited are recorded in the form of a list. The interface is embodied as follows: the page of webpage history is usually a list arranged in reverse order based on a timeline, and each item in the list is one piece of webpage history containing information such as a website icon (an icon format for system icons, software icons, and the like), a website name, a URL, and a browsing time point.

When the browser displays the webpage history in the form of the list, the webpage history is managed in the form of a stack, and webpage history added each time is located at the top of the stack, with a visit pointer indicating the position of a current webpage in a history stack. Each time a page is changed, the pointer of a current page always points to the record at the top of the history stack. Using Google Chrome as an example, the content of a webpage history stack will not be changed by a user through a forward/backward function (including a button, a shortcut, and a right-click menu) of the browser or a go/back/forward method provided by history (a window object) except that the pointer just moves. Thus, when the user visits the webpage history, a click into a new webpage results in the loss of part of the webpage history.

It can be seen that the method used by the browser in the related art for displaying webpage history in a list cannot display the time relationship of webpage history data or display the jump derivative relationship between historical webpages and can merely record and display the time at which a historical webpage is opened instead of displaying the time at which the historical webpage is closed and duration for which the webpage is opened. Additionally, the webpage history display method in the form of a list mixes the history of all webpages together and cannot separately display the relevant browsing history of a certain webpage. Meanwhile, history merely records and presents the latest websites visited by a user, but the webpage history is incomplete. The incomplete webpage history can neither make the user clearly and intuitively perceive the latest detailed website visit path nor reflect the frequency and time length of visit of a certain website by the user. Thus, the webpage history cannot help the user to quickly retrieve the most frequently visited website. If the webpage history exceeds the maximum number (such as 50 or 100) of items limited by the browser, each time one piece of webpage history enters from the top of the stack, one piece of webpage history moves out from the bottom of the stack, resulting in the incomplete display of the webpage history.

To conclude, in response to the actual situation of the explosive growth of information, no mainstream browser in the related art improves the interface presentation form of the webpage history. Thus, the user retrieves a historical webpage in a long and inefficient process and the user easily fails to retrieve a historical webpage.

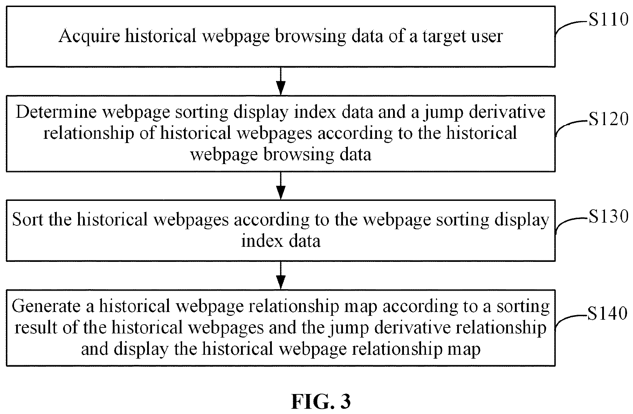

In an example, FIG. 3 is a flowchart of a webpage history display method according to an embodiment of the present disclosure. This embodiment is applicable to the case where a jump derivative relationship is introduced for generating a historical webpage relationship map and the historical webpage relationship map is displayed. The method may be performed by a webpage history display apparatus. The apparatus may be implemented by software and/or hardware and generally integrated in an electronic device. The electronic device may be a terminal device or a server device. The type of the electronic device is not limited in embodiments of the present disclosure. As shown in FIG. 3, the method includes the operations described below.

In S110, historical webpage browsing data of a target user is acquired.

The target user is a user having browsed historical webpages through a browser and having a requirement to browse a historical webpage again. The historical webpage browsing data may be data related to the historical webpages browsed by the target user in the browser.

In the embodiment of the present disclosure, before displaying webpage history to the target user, the browser needs to acquire the historical webpage browsing data of the target user generated in the browser. It is to be understood that to enrich the display of the historical webpages, the historical webpage browsing data may be all data related to the historical webpages browsed by the target user, for example, may include, but is not limited to, attribute information (such as a name, an identifier, or a link), browsing duration, and a browsing frequency of a historical webpage, a jump derivative relationship between the historical webpage and other historical webpages, an association relationship between the historical webpage and the target user, and the like.

In S120, webpage sorting display index data and a jump derivative relationship of the historical webpages are determined according to the historical webpage browsing data.

The webpage sorting display index data may be data for sorting a display sequence of the historical webpages, for example, may be relevant index data such as durations of visits, frequencies of visits, or webpage click rates of the historical webpages as long as the webpage sorting display index data can be used for sorting the historical webpages. The index type of the webpage sorting display index data is not limited in the embodiments of the present disclosure. The jump derivative relationship is a jump logic relationship between the historical webpages. For example, if the target user jumps to historical webpage B through a link in historical webpage A for browsing, a jump derivative relationship exists between historical webpage A and historical webpage B.

Accordingly, after acquiring the historical webpage browsing data, the browser may perform a statistical analysis on the acquired historical webpage browsing data to determine the webpage sorting display index data and the jump derivative relationship of the historical webpages browsed by the target user.

In S130, the historical webpages are sorted according to the webpage sorting display index data.

Further, the browser may sort the historical webpages browsed by the target user according to the statistically obtained webpage sorting display index data to determine the display sequence of the historical webpages. It is to be understood that since the index type of the webpage sorting display index data may be determined according to an actual requirement or a user designation, sorting the historical webpages according to the webpage sorting display index data can satisfy the requirement of the target user for sorting the historical webpages.

For example, the webpage history is sorted according to time lengths of visits and/or the frequencies of visits so that the target user is convenient to quickly find a website visited for longest time or most frequently, thereby improving the retrieval efficiency of the historical webpage by the target user.

In another example, the webpage history is sorted according to the webpage click rates so that a relatively hot historical webpage or a historical webpage most interested by the user may be preferentially displayed to the target user, thereby displaying the historical webpages of the target user in a personalized manner.

In S140, a historical webpage relationship map is generated according to a sorting result of the historical webpages and the jump derivative relationship and is displayed.

The historical webpage relationship map may be a visualized map displaying the historical webpages with the sorting result of the historical webpages and the jump derivative relationship as classification and editing factors.

It is to be understood that the jump derivative relationship can intuitively reflect a historical webpage visit path naturally generated based on a jump logic sequence between the historical webpages and thus can make the target user clearly and intuitively perceive the latest detailed website visit path.

In the embodiment of the present disclosure, generating the historical webpage relationship map is generated according to the sorting result of the historical webpages and the jump derivative relationship may include determining a basic display sequence of the historical webpages in the historical webpage relationship map according to the sorting result of the historical webpages. After determining the basic display sequence of the historical webpages in the historical webpage relationship map, the jump logic relationship between the historical webpages may be established according to the jump derivative relationship of the historical webpages, and positions where the historical webpages are displayed in the historical webpage relationship map are adjusted adaptively so that the final historical webpage relationship map is obtained and displayed to the target user. Therefore, the target user can intuitively and quickly link the historical webpage browsed by the target user according to the historical webpage relationship map, the historical webpages are transmitted with higher efficiency, and the target user retrieves the historical webpage with greatly improved efficiency, thereby improving the user experience of the user browsing the historical webpages.

In the embodiment of the present disclosure, the webpage sorting display index data and the jump derivative relationship of the historical webpages are determined according to the acquired historical webpage browsing data so that the historical webpages are sorted according to the webpage sorting display index data, and the historical webpage relationship map is generated according to the sorting result of the historical webpages and the jump derivative relationship and is displayed, thereby solving the problems where the webpage history display method in the related art is not intuitive enough and has low transmission efficiency and low user retrieval efficiency. The historical webpages browsed by the user can be intuitively displayed, improving the transmission efficiency of the historical webpages and improving the efficiency with which the user retrieves the historical webpage.

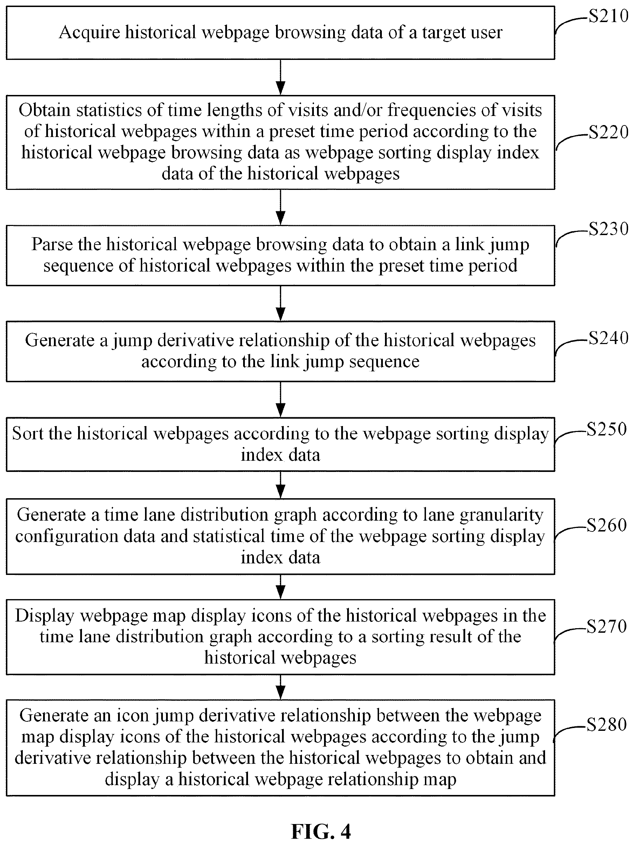

In an example, FIG. 4 is a flowchart of a webpage history display method according to an embodiment of the present disclosure. In the embodiment of the present disclosure, based on the technical solution in each preceding embodiment, an optimization and an improvement are made, and multiple optional implementations are provided for determining the webpage sorting display index data and the jump derivative relationship of the historical webpages according to the historical webpage browsing data and generating the historical webpage relationship map according to the sorting result of the historical webpages and the jump derivative relationship.

As shown in FIG. 4, the webpage history display method includes S210 to S280.

In S210, historical webpage browsing data of a target user is acquired.

Optionally, a browser may periodically crawl relevant data of websites browsed by the target user, such as a behavior path and starting and ending time of visit, store the relevant data as the historical webpage browsing data, buffer the historical webpage browsing data in a window object for the subsequent processing and application.

In S220, statistics of time lengths of visits and/or frequencies of visits of historical webpages within a preset time period are obtained according to the historical webpage browsing data as webpage sorting display index data of the historical webpages.

The preset time period may be a default time period of a system or a time period dynamically set according to a device where the browser is located. For example, the higher performance the device where the browser is located has, the longer the preset time period may be. Alternatively, the preset time period may also be manually set by the user, so as to satisfy the personalized display requirement of the user. The manner of setting the preset time period is not limited in the embodiment of the present disclosure.

Optionally, a time length of visit may be determined according to the starting and ending time of visit of a historical webpage. A frequency of visit may be determined according to the number of visits of a historical webpage and the preset time period.

In S230, the historical webpage browsing data is parsed so that a link jump sequence of historical webpages within the preset time period is obtained.

In S240, a jump derivative relationship of the historical webpages is generated according to the link jump sequence.

For example, the browser may perform parsing and statistics on the acquired historical webpage browsing data to obtain the link jump sequence between the historical webpages within the preset time period (for example, a jump from webpage A to webpage B, a jump from webpage B to webpage C, and so on) and then generates the jump derivative relationship between the historical webpages according to the link jump sequence acquired through parsing.

According to the above technical solution, the time lengths of visits and/or the frequencies of visits are used as the webpage sorting display index data of the historical webpages so that the target user can retrieve a historical webpage visited for longest time or most frequently with higher efficiency. The jump derivative relationship of the historical webpages is generated according to the link jump sequence obtained through parsing so that the accuracy of the jump derivative relationship can be ensured.

In S250, the historical webpages are sorted according to the webpage sorting display index data.

In an optional embodiment of the present disclosure, that the historical webpages are sorted according to the webpage sorting display index data may include: sorting the historical webpages according to the time lengths of visits or the frequencies of visits; or determining a time weight of the time lengths of visits and a frequency weight of the frequencies of visits, calculating a first product of the time weight and each of the time lengths of visits to obtain a visit time sorting subscore, calculating a second product of the frequency weight and each of the frequencies of visits to obtain a visit frequency sorting subscore, calculating a sum of the visit time sorting subscore and the visit frequency sorting subscore to obtain a comprehensive sorting score, and sorting the historical webpages according to the comprehensive sorting score.

The time weight may be a weight factor set for the time lengths of visits and the frequency weight may be a weight factor set for the frequencies of visits. The first product is a product of the time weight and the time length of visit, and the visit time sorting subscore may be a score calculated by the time length of visit for sorting. The second product is a product of the frequency weight and the frequency of visit, and the visit frequency sorting subscore may be a score calculated by the frequency of visit for sorting.

For example, when the webpage sorting display index data includes the time lengths of visits or the frequencies of visits, the historical webpages may be sorted in multiple optional manners. Optionally, the historical webpages may be sorted according to one type of webpage sorting display index data, for example, the historical webpages are only sorted according to the time lengths of visits, or the historical webpages are only sorted according to the frequencies of visits. The historical webpages may also be sorted by two different types of data, the time lengths of visits and the frequencies of visits. For example, the time weight of the time lengths of visits and the frequency weight of the frequencies of visits may be determined, where the time weight and the frequency weight may be default values of the system or may be specified and configured by the target user. Further, the first product of the time weight and the time length of visit is calculated so that the visit time sorting subscore is obtained, the second product of the frequency weight and the frequency of visit is calculated so that the visit frequency sorting subscore is obtained, and finally, the sum of the visit time sorting subscore and the visit frequency sorting subscore is calculated so that the comprehensive sorting score is obtained and the historical webpages are sorted according to the comprehensive sorting score.

According to the above technical solution, the historical webpages are sorted using the webpage sorting display index data in multiple optional manners, improving the sorting flexibility of the historical webpages.

In S260, a time lane distribution graph is generated according to lane granularity configuration data and statistical time of the webpage sorting display index data.

The lane granularity configuration data may be data for configuring lane attributes. A horizontal direction and a vertical direction of the time lane distribution graph may be a time axis and divided lanes, respectively. Optionally, the granularity of the time axis in the time lane distribution graph may be adjusted adaptively according to a user requirement or the number of browsed historical webpages.

In the embodiment of the present disclosure, a historical webpage relationship map may be constructed based on two factors: time and lane. For example, the statistical time of the webpage sorting display index data may be used as the time axis in the horizontal direction of the time lane distribution graph, and multiple longitudinal lanes are divided according to the lane granularity configuration data based on the time axis so that the time lane distribution graph is obtained.

In S270, webpage map display icons of the historical webpages are displayed in the time lane distribution graph according to a sorting result of the historical webpages.

The webpage map display icons may be basic units of the historical webpages displayed in the historical webpage relationship map.

After the time lane distribution graph is determined, since the sorting result of the historical webpages has been acquired, the webpage map display icons of the historical webpages may be displayed in the time lane distribution graph according to the sorting result of the historical webpages.

Optionally, the webpage map display icon may be composed of the time length of visit, webpage name, and preset identifier of the historical webpage.

In S280, an icon jump derivative relationship is generated between the webpage map display icons of the historical webpages according to the jump derivative relationship between the historical webpages so that the historical webpage relationship map is obtained and displayed.

The icon jump derivative relationship is a jump logic relationship between the webpage map display icons.

After the webpage map display icons of the historical webpages are displayed in the time lane distribution graph according to the sorting result of the historical webpages, the icon jump derivative relationship may be further generated between the webpage map display icons of the historical webpages according to the jump derivative relationship between the historical webpages so that the jump logic relationship between the webpage map display icons is established. Therefore, positions where the webpage map display icons of the historical webpages are displayed in the time lane distribution graph are adjusted according to the icon jump derivative relationship so that the final historical webpage relationship map is obtained and displayed to the target user.

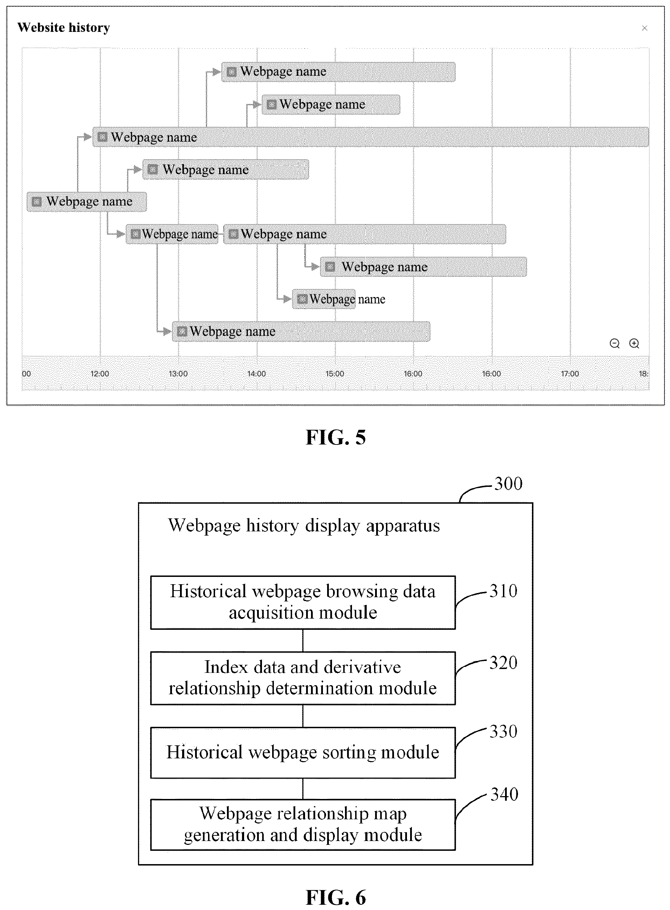

FIG. 5 is an effect schematic of a historical webpage relationship map according to an embodiment of the present disclosure. In an example, as shown in FIG. 5, the time axis in the horizontal direction and multiple lanes in the vertical direction constitute the time lane distribution graph. A gray rectangular box including the "webpage name" and an icon identifier is the webpage map display icon of each historical webpage. Accordingly, a connection relationship between the webpage map display icons is the icon jump derivative relationship. In the historical webpage relationship map shown in FIG. 5, a time length corresponding to the webpage map display icon of each historical webpage in the horizontal direction may be the time length of visit corresponding to the historical webpage, and the webpage map display icons from top to bottom may be sorted according to the frequencies of visits or the time lengths of visits. That is, the higher position the webpage map display icon is at, the higher the frequency of visit of the corresponding historical webpage or the longer the time length of visit of the corresponding historical webpage. In FIG. 5, each webpage map display icon may correspond to a web tag of one historical webpage in the browser. Webpage map display icons in different horizontal directions may be different web tags, and webpage map display icons in the same horizontal direction may be the same web tag which corresponds to different webpage content.

For example, if the icon jump derivative relationship exists between two webpage map display icons in different horizontal directions, as shown in FIG. 5, one webpage map display icon is connected to a webpage map display icon in an upper layer through a curved line, it indicates that when browsing the historical webpage corresponding to the webpage map display icon with the earlier starting time, the user opens a new web tag by clicking a jump link, where the new web tag displays the historical webpage corresponding to the webpage map display icon in the upper layer. If the icon jump derivative relationship exists between two webpage map display icons in the same horizontal direction, as shown in FIG. 5, one webpage map display icon is connected to another webpage map display icon in the same horizontal layer through a straight line, it indicates that when browsing the historical webpage corresponding to the webpage map display icon with the earlier starting time, the user directly jumps to the historical webpage corresponding to the webpage map display icon with the later starting time in the current web tag by clicking a jump link instead of opening a new web tag.

It can be seen that the historical webpage relationship map can intuitively display both the sorting relationship between the time lengths of visits or the frequencies of visits of the historical webpages and the detailed visit path of the historical webpages in the browser so that the user can quickly and intuitively understand the historical visit behavior of the user in the browser.

In an optional embodiment of the present disclosure, the webpage history display method may further include: determining a reminder flag display region of the webpage map display icons of the historical webpages in the historical webpage relationship map; and inserting an icon reminder flag in the reminder flag display region.

The reminder flag display region may be a region of the webpage map display icon for displaying the icon reminder flag. The icon reminder flag may be a flag for prompting the target user for relevant information of the historical webpage corresponding to the webpage map display icon.

To further enrich the display content of the historical webpage relationship map and improve the interaction experience of the target user with the historical webpage relationship map, after the historical webpage relationship map is obtained, a remindable attribute of the historical webpage may be determined according to a relationship between the historical webpage corresponding to each webpage map display icon and user data of the target user or according to an attribute relationship between historical webpages corresponding to webpage map display icons. Further, the icon reminder flag is generated according to the determined remindable attribute of the historical webpage and inserted in the reminder flag display region of the webpage map display icon.

For example, the remindable attribute may be a favorite webpage of the target user or a recent webpage having a relatively high click rate. Accordingly, the icon reminder flag may be, for example, a flag of a favorite webpage or a flag of a hot webpage.

In an optional embodiment of the present disclosure, the webpage history display method may further include: determining a user interaction control display region of the webpage map display icons of the historical webpages in the historical webpage relationship map; and inserting a user interaction control in the user interaction control display region.

The user interaction control display region may be a region of the webpage map display icon for displaying the user interaction control. The user interaction control may be a control capable of implementing the function of interaction of the target user with the historical webpage.

To further enrich the display content of the historical webpage relationship map and improve the interaction experience of the target user with the historical webpage relationship map, after the historical webpage relationship map is obtained, the user interaction control may be further inserted in the user interaction control display region of a webpage map display icon so that the target user can perform interaction with the historical webpage corresponding to the webpage map display icon through the user interaction control.

For example, the user interaction control may include, but is not limited to, types of interaction control such as copy, favorite, and fold. The target user may copy a link of the historical webpage corresponding to the webpage map display icon through a copy control, save the link of the historical webpage corresponding to the webpage map display icon through a favorite control, or fold the webpage map display icon through a fold control.

It is to be noted that when both the reminder flag display region and the user interaction control display region exist in the webpage map display icon, positions where the two regions are displayed in the webpage map display icon may be different, so as to avoid an intersection which affects a user operation.

In an optional embodiment of the present disclosure, the webpage history display method may further include: determining, in the historical webpage relationship map, an icon manipulation control display region for the webpage map display icons of the historical webpages; and displaying an icon manipulation control in the icon manipulation control display region.

The icon manipulation control display region may be a region of the historical webpage relationship map for displaying the icon manipulation control. The icon manipulation control may be a control capable of implementing the function of interaction of the target user with the webpage map display icons or the historical webpages corresponding to the webpage map display icons.

To further enrich the display content of the historical webpage relationship map and improve the interaction experience of the target user with the historical webpage relationship map, after the historical webpage relationship map is obtained, the icon manipulation control display region, in the historical webpage relationship map, for the webpage map display icons of the historical webpages may be further determined. For example, the icon manipulation control display region may be disposed at the upper right corner of the historical webpage relationship map so that the icon manipulation control is inserted and displayed in the icon manipulation control display region. The target user may interact with the webpage map display icons or the historical webpages corresponding to the webpage map display icons through the icon manipulation control.

For example, the icon manipulation control may be a filter control or a search control, or the like. The target user may input a filter condition through the filter control to filter the webpage map display icons or may input a search condition through the search control to search for a required webpage map display icon, so as to retain a webpage record of interest to the target user.

In an optional embodiment of the present disclosure, the webpage history display method may further include: acquiring an associated secure webpage link entry of a target historical webpage in response to a setting operation of the target user on a webpage map display icon of the target historical webpage displayed in the historical webpage relationship map; determining a secure entry display region of the webpage map display icon of the target historical webpage for the associated secure webpage link entry; and displaying the associated secure webpage link entry in the secure entry display region.

The target historical webpage may be a historical webpage selected by an operation of the target user. The setting operation may be a preset operation type, such as an up-slide operation or a click operation. The associated secure webpage link entry may be a webpage link entry having security and included in the target historical webpage. The secure entry display region may be a region for displaying the associated secure webpage link entry.

In the embodiment of the present disclosure, an anti-fraud function may be further added to the historical webpage relationship map. For example, if the target user performs the setting operation on the webpage map display icon of the target historical webpage in the process of operating on the webpage map display icons in the historical webpage relationship map, the browser may acquire all associated secure webpage link entries included in the target historical webpage and determine the secure entry display region of the webpage map display icon in the target historical webpage for the associated secure webpage link entries. Optionally, the secure entry display region may be dynamically determined according to current layout positions of the webpage map display icons. For example, the secure entry display region is determined in a floating manner, or the webpage map display icons are not included in the historical webpage relationship map and the secure entry display region is determined in a blank region close to the webpage map display icon of the target historical webpage. After the secure entry display region is determined, information about each associated secure webpage link entry may be displayed in the secure entry display region according to a corresponding rule for reference by the target user. Such arrangement has the following advantage: the associated secure webpage link entry is displayed to the target user so that fraud links can be effectively shielded, ensuring the security of the target user browsing webpages.

According to the preceding technical solution, the webpage sorting display index data and the jump derivative relationship of the historical webpages are determined according to the acquired historical webpage browsing data so that the historical webpages are sorted according to the webpage sorting display index data, and the historical webpage relationship map is generated according to the sorting result of the historical webpages and the jump derivative relationship, and various user interaction functions are added to the historical webpage relationship map. Therefore, the historical webpages browsed by the user can be intuitively displayed, improving the transmission efficiency of the historical webpages and improving the efficiency with which the user retrieves the historical webpage.

In the technical solutions of the present disclosure, the collection, storage, use, processing, transmission, provision, and disclosure of user personal information (such as a favorite webpage of a user or other relevant data) involved are in compliance with the provisions of relevant laws and regulations and do not violate the public order and good customs.

It is to be noted that any arrangement and combination of various technical features in the preceding embodiments are also within the scope of the present disclosure.

In an example, FIG. 6 is a structural diagram of a webpage history display apparatus according to an embodiment of the present disclosure. The embodiment of the present disclosure is applicable to the case where a jump derivative relationship is introduced for generating a historical webpage relationship map and the historical webpage relationship map is displayed. The apparatus is implemented by software and/or hardware and may be configured in an electronic device. The electronic device may be a terminal device or a server device. The type of the electronic device is not limited in embodiments of the present disclosure.

As shown in FIG. 6, a webpage history display apparatus 300 includes a historical webpage browsing data acquisition module 310, an index data and derivative relationship determination module 320, a historical webpage sorting module 330, and a webpage relationship map generation and display module 340.

The historical webpage browsing data acquisition module 310 is configured to acquire historical webpage browsing data of a target user.

The index data and derivative relationship determination module 320 is configured to determine webpage sorting display index data and a jump derivative relationship of historical webpages according to the historical webpage browsing data.

The historical webpage sorting module 330 is configured to sort the historical webpages according to the webpage sorting display index data.

The webpage relationship map generation and display module 340 is configured to generate a historical webpage relationship map according to a sorting result of the historical webpages and the jump derivative relationship and display the historical webpage relationship map.

In the embodiment of the present disclosure, the webpage sorting display index data and the jump derivative relationship of the historical webpages are determined according to the acquired historical webpage browsing data so that the historical webpages are sorted according to the webpage sorting display index data, and the historical webpage relationship map is generated according to the sorting result of the historical webpages and the jump derivative relationship and is displayed, thereby solving the problems where the webpage history display method in the related art is not intuitive enough and has low transmission efficiency and low user retrieval efficiency. The historical webpages browsed by the user can be intuitively displayed, improving the transmission efficiency of the historical webpages and improving the efficiency with which the user retrieves a historical webpage.

Optionally, the index data and derivative relationship determination module 320 is configured to: obtain statistics of time lengths of visits and/or frequencies of visits of the historical webpages within a preset time period according to the historical webpage browsing data as the webpage sorting display index data of the historical webpages; parse the historical webpage browsing data to obtain a link jump sequence of historical webpages within the preset time period; and generate the jump derivative relationship of the historical webpages according to the link jump sequence.

Optionally, the historical webpage sorting module 330 is configured to: sort the historical webpages according to the time lengths of visits or the frequencies of visits; or determine a time weight of the time lengths of visits and a frequency weight of the frequencies of visits, calculate a first product of the time weight and each of the time lengths of visits to obtain a visit time sorting subscore, calculate a second product of the frequency weight and each of the frequencies of visits to obtain a visit frequency sorting subscore, calculate a sum of the visit time sorting subscore and the visit frequency sorting subscore to obtain a comprehensive sorting score, and sort the historical webpages according to the comprehensive sorting score.

Optionally, the webpage relationship map generation and display module 340 is configured to: generate a time lane distribution graph according to lane granularity configuration data and statistical time of the webpage sorting display index data; display webpage map display icons of the historical webpages in the time lane distribution graph according to the sorting result of the historical webpages; and generate an icon jump derivative relationship between the webpage map display icons of the historical webpages according to the jump derivative relationship between the historical webpages to obtain and display the historical webpage relationship map.

Optionally, the webpage history display apparatus may further include a reminder flag display region determination module and an icon reminder flag insertion module. The reminder flag display region determination module is configured to determine a reminder flag display region of the webpage map display icons of the historical webpages in the historical webpage relationship map. The icon reminder flag insertion module is configured to insert an icon reminder flag in the reminder flag display region.

Optionally, the webpage history display apparatus may further include a user interaction control display region determination module and a user interaction control insertion module. The user interaction control display region determination module is configured to determine a user interaction control display region of the webpage map display icons of the historical webpages in the historical webpage relationship map. The user interaction control insertion module is configured to insert a user interaction control in the user interaction control display region.

Optionally, the webpage history display apparatus may further include an icon manipulation control display region determination module and an icon manipulation control display module. The icon manipulation control display region determination module is configured to determine an icon manipulation control display region of the historical webpage relationship map for the webpage map display icons of the historical webpages. The icon manipulation control display module is configured to display an icon manipulation control in the icon manipulation control display region.

Optionally, the webpage history display apparatus may further include an associated secure webpage link entry acquisition module, a secure entry display region determination module, and an associated secure webpage link entry display module. The associated secure webpage link entry acquisition module is configured to acquire an associated secure webpage link entry of a target historical webpage in response to a setting operation of the target user on a webpage map display icon of the target historical webpage displayed in the historical webpage relationship map. The secure entry display region determination module is configured to determine a secure entry display region of the webpage map display icon of the target historical webpage for the associated secure webpage link entry. The associated secure webpage link entry display module is configured to display the associated secure webpage link entry in the secure entry display region.

The preceding webpage history display apparatus may perform the webpage history display method according to any embodiment of the present disclosure and has function modules and beneficial effects corresponding to the performed method. For technical details not described in detail in this embodiment, reference may be made to the webpage history display method according to any embodiment of the present disclosure.

The preceding webpage history display apparatus is an apparatus that can perform the webpage history display method in embodiments of the present disclosure. Therefore, based on the webpage history display method described in the embodiments of the present disclosure, those skilled in the art can understand embodiments of the webpage history display apparatus in this embodiment and various variations thereof. Thus, how the webpage history display apparatus implements the webpage history display method in the embodiments of the present disclosure is not described in detail here. Any apparatus used by those skilled in the art to implement the webpage history display method in the embodiments of the present disclosure falls within the scope of the present disclosure.

In an example, the present disclosure further provides an electronic device, a readable storage medium, and a computer program product.

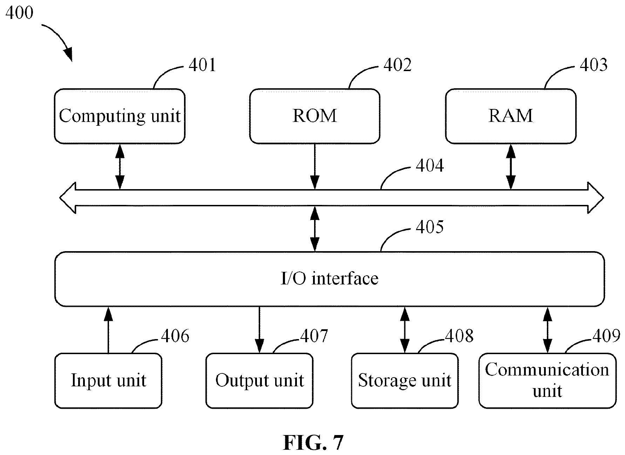

FIG. 7 is a block diagram illustrative of an exemplary electronic device 400 that may be used for implementing embodiments of the present disclosure. The electronic device is intended to represent various forms of digital computers, for example, laptop computers, desktop computers, worktables, personal digital assistants, servers, blade servers, mainframe computers, and other applicable computers. The electronic device may also represent various forms of mobile devices, for example, personal digital assistants, cellphones, smartphones, wearable devices, and other similar computing devices. Herein the shown components, the connections and relationships between these components, and the functions of these components are illustrative only and are not intended to limit the implementation of the present disclosure as described and/or claimed herein.

As shown in FIG. 7, the device 400 includes a computing unit 401. The computing unit 401 may perform various appropriate actions and processing according to a computer program stored in a read-only memory (ROM) 402 or a computer program loaded into a random-access memory (RAM) 403 from a storage unit 408. Various programs and data required for operations of the device 400 may also be stored in the RAM 403. The computing unit 401, the ROM 402, and the RAM 403 are connected to each other through a bus 404. An input/output (I/O) interface 405 is also connected to the bus 404.

Multiple components in the device 400 are connected to the I/O interface 405. The multiple components include an input unit 406 such as a keyboard and a mouse, an output unit 407 such as various types of display and speaker, the storage unit 408 such as a magnetic disk and an optical disk, and a communication unit 409 such as a network card, a modem, and a wireless communication transceiver. The communication unit 409 allows the device 400 to exchange information/data with other devices over a computer network such as the Internet and/or over various telecommunication networks.

The computing unit 401 may be various general-purpose and/or special-purpose processing components having processing and computing capabilities. Examples of the computing unit 401 include, but are not limited to, a central processing unit (CPU), a graphics processing unit (GPU), a special-purpose artificial intelligence (AI) computing chip, a computing unit executing machine learning model algorithms, a digital signal processor (DSP), and any appropriate processor, controller, and microcontroller. The computing unit 401 performs the preceding methods and processing, such as a webpage history display method. For example, in some embodiments, the webpage history display method may be implemented as a computer software program tangibly contained in a machine-readable medium such as the storage unit 408. In some embodiments, part or all of a computer program may be loaded and/or installed on the device 400 via the ROM 402 and/or the communication unit 409. When the computer program is loaded onto the RAM 403 and executed by the computing unit 401, one or more steps of the preceding webpage history display method may be performed. Alternatively, in other embodiments, the computing unit 401 may be configured, in any other suitable manner (for example, by means of firmware), to perform the webpage history display method.

Herein various implementations of the systems and techniques described above may be implemented in digital electronic circuitry, integrated circuitry, field-programmable gate arrays (FPGAs), application-specific integrated circuits (ASICs), application-specific standard products (ASSPs), systems on chips (SoCs), complex programmable logic devices (CPLDs), computer hardware, firmware, software, and/or combinations thereof. The various implementations may include implementations in one or more computer programs. The one or more computer programs are executable and/or interpretable on a programmable system including at least one programmable processor. The programmable processor may be a special-purpose or general-purpose programmable processor for receiving data and instructions from a memory system, at least one input device, and at least one output device and transmitting data and instructions to the memory system, the at least one input device, and the at least one output device.

Program codes for implementation of the methods of the present disclosure may be written in any combination of one or more programming languages. These program codes may be provided for the processor or controller of a general-purpose computer, a special-purpose computer, or another programmable data processing device to enable functions/operations specified in a flowchart and/or a block diagram to be implemented when the program codes are executed by the processor or controller. The program codes may all be executed on a machine; may be partially executed on a machine; may serve as a separate software package that is partially executed on a machine and partially executed on a remote machine; or may all be executed on a remote machine or a server.

In the context of the present disclosure, the machine-readable medium may be a tangible medium that may contain or store a program available for an instruction execution system, apparatus, or device or a program used in conjunction with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device or any appropriate combination thereof. Concrete examples of the machine-readable storage medium include an electrical connection based on one or more wires, a portable computer disk, a hard disk, a RAM, a ROM, an erasable programmable read-only memory (EPROM) or a flash memory, an optical fiber, a portable compact disc read-only memory (CD-ROM), an optical storage device, a magnetic storage device, or any appropriate combination thereof.

In order that interaction with a user is provided, the systems and techniques described herein may be implemented on a computer. The computer has a display device (for example, a cathode-ray tube (CRT) or a liquid-crystal display (LCD) monitor) for displaying information to the user; and a keyboard and a pointing device (for example, a mouse or a trackball) through which the user can provide input for the computer. Other types of devices may also be used for providing interaction with a user. For example, feedback provided for the user may be sensory feedback in any form (for example, visual feedback, auditory feedback, or haptic feedback). Moreover, input from the user may be received in any form (including acoustic input, voice input, or haptic input).

The systems and techniques described herein may be implemented in a computing system including a back-end component (for example, a data server), a computing system including a middleware component (for example, an application server), a computing system including a front-end component (for example, a client computer having a graphical user interface or a web browser through which a user can interact with implementations of the systems and techniques described herein), or a computing system including any combination of such back-end, middleware, or front-end components. Components of a system may be interconnected by any form or medium of digital data communication (for example, a communication network). Examples of the communication network include a local area network (LAN), a wide area network (WAN), a blockchain network, and the Internet.

A computer system may include clients and servers. A client and a server are generally remote from each other and typically interact through a communication network. The relationship between the client and the server arises by virtue of computer programs running on respective computers and having a client-server relationship to each other. The server may be a cloud server, also referred to as a cloud computing server or a cloud host. As a host product in a cloud computing service system, the server solves the defects of difficult management and weak service scalability in a related physical host and a related virtual private server (VPS). The server may also be a server of a distributed system or a server combined with a blockchain.

In embodiments of the present disclosure, webpage sorting display index data and a jump derivative relationship of historical webpages are determined according to acquired historical webpage browsing data so that the historical webpages are sorted according to the webpage sorting display index data, and a historical webpage relationship map is generated according to a sorting result of the historical webpages and the jump derivative relationship and is displayed, thereby solving the problems where the webpage history display method in the related art is not intuitive enough and has low transmission efficiency and low user retrieval efficiency. The historical webpages browsed by a user can be intuitively displayed, improving the transmission efficiency of the historical webpages and improving the efficiency with which the user retrieves a historical webpage.

It is to be understood that various forms of the preceding flows may be used, with steps reordered, added, or removed. For example, steps described in the present disclosure may be executed in parallel, in sequence, or in a different order as long as the desired results of the technical solutions disclosed in the present disclosure are achieved. The execution sequence of the steps is not limited herein.

The scope of the present disclosure is not limited to the preceding embodiments. It is to be understood by those skilled in the art that various modifications, combinations, subcombinations, and substitutions may be made according to design requirements and other factors. Any modifications, equivalent substitutions, improvements, and the like made within the spirit and principle of the present disclosure fall within the scope of the present disclosure.

## Claims

1. A webpage history display method, comprising:
acquiring (S110, S210) historical webpage browsing data of a target user;
determining (S120) webpage sorting display index data and a jump derivative relationship of historical webpages according to the historical webpage browsing data;
sorting (S130, S250) the historical webpages according to the webpage sorting display index data; and
generating (S140) a historical webpage relationship map according to a sorting result of the historical webpages and the jump derivative relationship and displaying the historical webpage relationship map.

2. The method of claim 1, wherein determining (S120) the webpage sorting display index data and the jump derivative relationship of the historical webpages according to the historical webpage browsing data comprises:
obtaining (S220) at least one of statistics of time lengths of visits or frequencies of visits of the historical webpages within a preset time period according to the historical webpage browsing data as the webpage sorting display index data of the historical webpages;
parsing (S230) the historical webpage browsing data to obtain a link jump sequence of historical webpages within the preset time period; and
generating (S240) the jump derivative relationship of the historical webpages according to the link jump sequence.

3. The method of claim 2, wherein sorting (S130, S250) the historical webpages according to the webpage sorting display index data comprises:
sorting the historical webpages according to the time lengths of visits or the frequencies of visits; or
determining a time weight of the time lengths of visits and a frequency weight of the frequencies of visits,
calculating a first product of the time weight and each of the time lengths of visits to obtain a visit time sorting subscore,
calculating a second product of the frequency weight and each of the frequencies of visits to obtain a visit frequency sorting subscore,
calculating a sum of the visit time sorting subscore and the visit frequency sorting subscore to obtain a comprehensive sorting score, and
sorting the historical webpages according to the comprehensive sorting score.

4. The method of claim 1, wherein generating (S140) the historical webpage relationship map according to the sorting result of the historical webpages and the jump derivative relationship and displaying the historical webpage relationship map comprise:
generating (S260) a time lane distribution graph according to lane granularity configuration data and statistical time of the webpage sorting display index data;
displaying (S270) webpage map display icons of the historical webpages in the time lane distribution graph according to the sorting result of the historical webpages; and
generating (S280) an icon jump derivative relationship between the webpage map display icons of the historical webpages according to the jump derivative relationship between the historical webpages to obtain and display the historical webpage relationship map.

5. The method of claim 1, further comprising:
determining a reminder flag display region of webpage map display icons of the historical webpages in the historical webpage relationship map; and
inserting an icon reminder flag in the reminder flag display region.

6. The method of claim 1, further comprising:
determining a user interaction control display region of webpage map display icons of the historical webpages in the historical webpage relationship map; and
inserting a user interaction control in the user interaction control display region.

7. The method of claim 1, further comprising:
determining, in the historical webpage relationship map, an icon manipulation control display region for webpage map display icons of the historical webpages; and
displaying an icon manipulation control in the icon manipulation control display region.

8. The method of claim 1, further comprising:
acquiring an associated secure webpage link entry of a target historical webpage in response to a setting operation of the target user on a webpage map display icon of the target historical webpage displayed in the historical webpage relationship map;
determining a secure entry display region of the webpage map display icon of the target historical webpage for the associated secure webpage link entry; and
displaying the associated secure webpage link entry in the secure entry display region.

9. A webpage history display apparatus (300), comprising:
a historical webpage browsing data acquisition module (310), which is configured to acquire historical webpage browsing data of a target user;
an index data and derivative relationship determination module (320), which is configured to determine webpage sorting display index data and a jump derivative relationship of historical webpages according to the historical webpage browsing data;
a historical webpage sorting module (330), which is configured to sort the historical webpages according to the webpage sorting display index data; and
a webpage relationship map generation and display module (340), which is configured to generate a historical webpage relationship map according to a sorting result of the historical webpages and the jump derivative relationship and display the historical webpage relationship map.

10. The apparatus of claim 9, wherein the index data and derivative relationship determination module (320) is configured to:
obtain at least one of statistics of time lengths of visits or frequencies of visits of the historical webpages within a preset time period according to the historical webpage browsing data as the webpage sorting display index data of the historical webpages;
parse the historical webpage browsing data to obtain a link jump sequence of historical webpages within the preset time period; and
generate the jump derivative relationship of the historical webpages according to the link jump sequence.

11. The apparatus of claim 10, wherein the historical webpage sorting module (330) is configured to:
sort the historical webpages according to the time lengths of visits or the frequencies of visits; or
determine a time weight of the time lengths of visits and a frequency weight of the frequencies of visits,
calculate a first product of the time weight and each of the time lengths of visits to obtain a visit time sorting subscore,
calculate a second product of the frequency weight and each of the frequencies of visits to obtain a visit frequency sorting subscore,
calculate a sum of the visit time sorting subscore and the visit frequency sorting subscore to obtain a comprehensive sorting score, and
sort the historical webpages according to the comprehensive sorting score.

12. The apparatus of claim 9, wherein the webpage relationship map generation and display module (340) is configured to:
generate a time lane distribution graph according to lane granularity configuration data and statistical time of the webpage sorting display index data;
display webpage map display icons of the historical webpages in the time lane distribution graph according to the sorting result of the historical webpages; and
generate an icon jump derivative relationship between the webpage map display icons of the historical webpages according to the jump derivative relationship between the historical webpages to obtain and display the historical webpage relationship map.

13. An electronic device, comprising:
at least one processor; and
a memory communicatively connected to the at least one processor;
wherein the memory stores an instruction executable by the at least one processor to cause the at least one processor to perform the webpage history display method of any one of claims 1 to 8.

14. Anon-transitory computer-readable storage medium, which is configured to store a computer instruction for causing a computer to perform the webpage history display method of any one of claims 1 to 8.

15. A computer program, which, when executed by a processor, causes the processor to performthe webpage history display method of any one of claims 1 to 8.
